# EUROPÄISCHE PATENTSCHRIFT

(11) **EP 4 109 112 B1**
(45) Veröffentlichungstag und Bekanntmachung des Hinweises auf die Patenterteilung: **07.01.2026**
(21) Anmeldenummer: 22167352.8
(22) Anmeldetag: 08.04.2022
(51) Int. Cl.: G01P 21/02

(54) **VERFAHREN ZUM ÜBERPRÜFEN DER FAHRGESCHWINDIGKEIT EINES FAHRRADS**
METHOD FOR CHECKING THE SPEED OF A BICYCLE
PROCÉDÉ DE CONTRÔLE DE LA VITESSE DE MARCHE D'UN VÉLO

(30) Priorität: 04.05.2021 DE 102021204468
(43) Veröffentlichungstag der Anmeldung: 28.12.2022
(73) Patentinhaber: Robert Bosch GmbH, 70442 Stuttgart (DE)
(72) Erfinder: Stegmaier, Juergen, 72827 Wannweil (DE); Dackermann, Tim, 72074 Tuebingen (DE)

(56) Entgegenhaltungen:
- EP-B1- 1 462 771
- DE-A1- 102014 212 760

## Beschreibung

### Technisches Gebiet

Die Erfindung betrifft ein Verfahren zum Überprüfen der Fahrgeschwindigkeit eines Fahrrads, insbesondere eines Pedelecs.

Die Erfindung betrifft weiter eine Vorrichtung zum Überprüfen der Fahrgeschwindigkeit eines Fahrrads, insbesondere eines Pedelecs.

Die Erfindung betrifft weiter ein Fahrrad.

### Stand der Technik

Obwohl die vorliegende Erfindung allgemein auf beliebige Fahrräder anwendbar ist, wird die vorliegende Erfindung in Bezug auf Fahrräder in Form von Pedelecs beschrieben.

Pedelecs weisen eine Motorunterstützung bis zu einer maximalen Geschwindigkeit von 25 km/h auf. Um diesen Grenzwert einhalten zu können, erfolgt am Pedelec eine Geschwindigkeitsmessung. In bekannter Weise kann dabei die Geschwindigkeitsmessung mithilfe eines am Hinterrad angeordneten Magneten in Kombination mit einem am Rahmen des Pedelecs angeordneten Reed-Sensors erfolgen. Die Geschwindigkeit wird anschließend aus dem mathematischen Zusammenhang zwischen dem Zeitabstand zweier aufeinanderfolgender Reed-Impulse sowie dem im Pedelec-System einprogrammierten Reifenumfang berechnet.

Problematisch hierbei ist, dass die Motorunterstützung abgeschaltet werden muss, falls die Geschwindigkeit nicht mehr zuverlässig ermittelt werden kann, beispielsweise wenn der Reed-Sensor defekt ist und ein Geschwindigkeitssignal liefert, welches eine von der realen Fahrgeschwindigkeit des Pedelec abweichende Geschwindigkeit impliziert. Eine Motorunterstützung bei Fahrgeschwindigkeiten größer 25 km/h kann zu einem Überhitzen des Antriebs, der Energieversorgung oder zu Brüchen in mechanischen Antriebskomponenten führen.

DE 10 2014 212 760 A1 offenbart ein Verfahren und eine entsprechende Vorrichtung zum Überprüfen der Fahrgeschwindigkeit eines Fahrrads, insbesondere eines Pedelecs, umfassend das Ermitteln einer ersten Geschwindigkeit für das Fahrrad anhand eines Signals eines Geschwindigkeitssignalgebers, das Ermitteln einer zweiten Geschwindigkeit mittels eines Geschwindigkeitssensors, das Ermitteln eines Vergleichsergebnisses durch Vergleichen der ermittelten ersten und zweiten Geschwindigkeit, und das Erkennen eines fehlerhaften Geschwindigkeitssignalgebers in Abhängigkeit des Vergleichsergebnisses.

### Offenbarung der Erfindung

In einer Ausführungsform stellt die vorliegende Erfindung ein Verfahren gemäß Anspruch 1 zum Überprüfen der Fahrgeschwindigkeit eines Fahrrads, insbesondere eines Pedelecs, bereit, umfassend die Schritte,
- Bereitstellen einer Energieversorgung für einen Geschwindigkeitssignalgeber,
- Ermitteln einer ersten Geschwindigkeit für das Fahrrad anhand eines Signals des Geschwindigkeitssignalgebers,
- Unterbrechen der Energieversorgung für den Geschwindigkeitssignalgeber für eine vorgebbare Unterbrechungszeitspanne,
- während der abgeschalteten Energieversorgung, Ermitteln einer zweiten Geschwindigkeit mittels eines Geschwindigkeitssensors,
- Ermitteln eines Vergleichsergebnisses durch Vergleichen der ermittelten ersten und zweiten Geschwindigkeit, und
- Erkennen eines fehlerhaften Geschwindigkeitssignalgebers in Abhängigkeit des Vergleichsergebnisses.

In einer weiteren Ausführungsform stellt die vorliegende Erfindung eine Vorrichtung gemäß Anspruch 13 zum Überprüfen der Fahrgeschwindigkeit eines Fahrrads, insbesondere eines Pedelecs, bereit, umfassend einen Geschwindigkeitssignalgeber,
einen Geschwindigkeitssensor,
eine Energieversorgungseinrichtung zur Energieversorgung für den Geschwindigkeitssignalgeber,
eine Messeinrichtung, ausgebildet zum Ermitteln einer Geschwindigkeit für das Fahrrad anhand eines Signals des Geschwindigkeitssignalgebers,
eine Überprüfungseinrichtung, die ausgebildet ist, die Energieversorgung für den Geschwindigkeitssignalgeber für eine vorgebbare Unterbrechungszeitspanne zu unterbrechen, und während der abgeschalteten Energieversorgung für den Geschwindigkeitssignalgeber, die Messeinrichtung zum Ermitteln einer zweiten Ge-Geschwindigkeit mittels des Geschwindigkeitssensors, zu steuern, und anschließend ein Vergleichsergebnis durch Vergleichen der ermittelten ersten und zweiten Geschwindigkeit zu ermitteln und einen fehlerhaften Geschwindigkeitssignalgeber in Abhängigkeit des Vergleichsergebnisses zu erkennen.

In einer weiteren Ausführungsform stellt die vorliegende Erfindung ein Fahrrad mit einer Vorrichtung gemäß Anspruch 14 bereit.

Einer der damit erzielten Vorteile ist, dass auf einfache und äußerst zuverlässige Weise ein defekter Geschwindigkeitssignalgeber ermittelt werden kann. Ein weiterer Vorteil ist, dass die Lebensdauer von Komponenten des Fahrrads erhöht wird, da sichergestellt wird, dass diese lediglich innerhalb ihrer Spezifikation betrieben werden und nicht übermäßig auf Grund zu hoher Geschwindigkeitsunterstützung belastet werden.

Weitere Merkmale, Vorteile und weitere Ausführungsformen der Erfindung sind im Folgenden beschrieben oder werden dadurch offenbar.

Gemäß einer vorteilhaften Weiterbildung der Erfindung wird die Energieversorgung in regelmäßigen Zeitabständen unterbrochen. Einer der damit möglichen Vorteile ist, dass eine regelmäßige Überprüfung des ersten Geschwindigkeitssensors ermöglicht wird.

Gemäß einer weiteren vorteilhaften Weiterbildung der Erfindung wird die Energieversorgung ereignisbasiert unterbrochen. Einer der damit möglichen Vorteile ist, dass damit auf flexible Weise, beispielsweise wenn eine gemessene Beschleunigung einen bestimmten Grenzwert überschreitet, der erste Geschwindigkeitssensor hinsichtlich seiner ordnungsgemäßen Funktion überprüft werden kann.

Gemäß einer weiteren vorteilhaften Weiterbildung der Erfindung erfolgt das Ermitteln der ersten Geschwindigkeit anhand eines Signals des Geschwindigkeitssignalgebers und/oder das Ermitteln der zweiten Geschwindigkeit anhand eines Geschwindigkeitssensors. Vorteil hiervon ist, dass damit auf zuverlässige Weise die erste und zweite Geschwindigkeit ermittelt werden kann.

Gemäß einer weiteren vorteilhaften Weiterbildung der Erfindung wird die Unterbrechungszeitspanne für zumindest zwei Unterbrechungen unterschiedlich festgelegt, insbesondere wobei bei jeder Unterbrechung der Energieversorgung eine andere Unterbrechungszeitspanne festgelegt wird, insbesondere zufällig aus einem vorgegebenen Zeitintervall ausgewählt wird. Einer der damit möglichen Vorteile ist, dass damit die ordnungsgemäße Funktion unabhängig von vorgegebenen Zeiten oder Ereignissen überprüft wird.

Gemäß einer weiteren vorteilhaften Weiterbildung der Erfindung wird der Geschwindigkeitssignalgeber mittels eines weiteren Überprüfungsverfahrens auf ordnungsgemäße Funktion hin überprüft, wobei ein Erkennen eines fehlerhaften Geschwindigkeitssignalgebers in Abhängigkeit des Vergleichsergebnisses und einem Ergebnis des weiteren Prüfungsverfahrens erfolgt. Damit wird die Zuverlässigkeit der Überprüfung des Ergebnisses und der Überprüfung des Geschwindigkeitssignalgebers noch weiter verbessert.

Gemäß einer weiteren vorteilhaften Weiterbildung der Erfindung ist der Geschwindigkeitssignalgeber pulsbasiert ausgebildet und das Unterbrechen der Energieversorgung für den Geschwindigkeitssignalgeber erfolgt immer dann, wenn ein Puls des Geschwindigkeitssignalgebers erwartet wird. Damit kann die Zuverlässigkeit der Überprüfung der Funktion des Geschwindigkeitssignalgebers noch erhöht werden.

Gemäß einer weiteren vorteilhaften Weiterbildung der Erfindung wird jeweils das Ereignis, wenn ein fehlerhafter Geschwindigkeitssignalgeber erkannt wird, gezählt, innerhalb einer vorgebbaren Zeitspanne und mit zumindest einem Zähl-Schwellwert verglichen und wobei eine Aktion erst dann initiiert wird, wenn der vorgegebene Zähl-Schwellwert, vorzugsweise wobei der Zählschwellwert den Wert 3 aufweist, überschritten wird. Damit kann die Zuverlässigkeit der Überprüfung der Funktion des Geschwindigkeitssignalgebers und das Erkennen eines fehlerhaften Geschwindigkeitssignalgebers noch erhöht werden. Der Begriff "Aktion" ist im weitesten Sinne zu verstehen, und bezieht sich insbesondere in den Ansprüchen, vorzugsweise in der Beschreibung, auf jegliche Art von Maßnahme, Vorgang, Aktivität oder Akt, die hier nach einem erkannten fehlerhaften Geschwindigkeitssignalgeber initiiert oder durchgeführt wird. Als Zählschwellwert kann auch beispielsweise der Wert 2, 4, 5, 10 oder dergleichen verwendet werden.

Gemäß einer weiteren vorteilhaften Weiterbildung der Erfindung erfolgt die Aktion in Form von
- einem, insbesondere zeitversetzten, Abschalten zumindest einer Antriebseinrichtung des Fahrrads, insbesondere des Fahrradsystems des Fahrrads, und/oder
- einer Anzeige, insbesondere einer visuellen Anzeige für einen Nutzer des Fahrrads, und/oder
- einer Benachrichtigung eines Diagnosesystems des Fahrrads, und/oder
- einem Umschalten auf ein zum Geschwindigkeitssignalgeber alternativen Geschwindigkeitssignal zur Ermittlung der Geschwindigkeit des Fahrrads, insbesondere GPS.

Damit kann auf flexible Weise einem fehlerhaften Geschwindigkeitssignalgeber Rechnung getragen werden, indem beispielsweise das komplette Fahrradsystem, also sämtliche Unterstützungskomponenten, wie Antrieb, ABS, Licht oder dergleichen abgeschaltet wird. Das Abschalten kann dabei zeitversetzt beziehungsweise verzögert erfolgen, damit der Nutzer des Fahrrads dieses vor dem Abschalten einer oder aller Unterstützungskomponenten noch zum Stillstand bringen kann.

Gemäß einer weiteren vorteilhaften Weiterbildung der Erfindung erfolgt das Vergleichen der ermittelten ersten und zweiten Geschwindigkeit mittels Differenzbildung zwischen der ersten und zweiten Geschwindigkeit und anhand der Differenzen wird ermittelt, ob ein Sprung zwischen den jeweiligen Geschwindigkeiten vorliegt. Vorteil hiervon ist ein besonders einfaches Verfahren, um die Geschwindigkeiten zu vergleichen.

Gemäß einer weiteren vorteilhaften Weiterbildung der Erfindung liegt ein Sprung vor, wenn ein Betrag der jeweiligen Differenz größer als ein vorgebbarer Wert ist, insbesondere wobei der Wert 5 km/h beträgt, und/oder wenn eine der beiden Geschwindigkeiten 0 km/h beträgt. Vorteil hiervon ist eine einfache und schnelle Berechnung sowie eine ausreichende Genauigkeit, um einen fehlerhaften Geschwindigkeitssignalgeber zu erkennen.

Gemäß einer weiteren vorteilhaften Weiterbildung der Erfindung wird der vorgebbare Wert in Abhängigkeit von zumindest einer der ermittelten Geschwindigkeiten festgelegt. Damit kann beispielsweise eine prozentuale Festlegung erfolgen, sodass immer die gleiche relative Abweichung als Messungenauigkeit des Geschwindigkeitssignalgebers angenommen wird. Vorteil hiervon ist eine zuverlässigere Überprüfung des Geschwindigkeitssignalgebers.

Gemäß einer weiteren vorteilhaften Weiterbildung der Erfindung erfolgt ein Ermitteln einer dritten Geschwindigkeit, insbesondere mittels des Geschwindigkeitssignalgebers, und das Ermitteln eines Vergleichsergebnisses durch Vergleichen der ermittelten ersten, zweiten und dritten Geschwindigkeit. Vorteil hiervon ist ein noch zuverlässigeres Vergleichsergebnis für die Überprüfung des Geschwindigkeitssignalgebers, ob dieser fehlerhaft ist oder nicht.

Weitere wichtige Merkmale und Vorteile der Erfindung ergeben sich aus den Unteransprüchen, aus den Zeichnungen und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

### Kurze Beschreibung der Zeichnungen

Dabei zeigt in schematischer Form
- Figur 1: Schritte eines Verfahrens gemäß einer Ausführungsform der vorliegenden Erfindung; und
- Figur 2: eine Vorrichtung gemäß einer Ausführungsform der vorliegenden Erfindung.

### Ausführungsformen der Erfindung

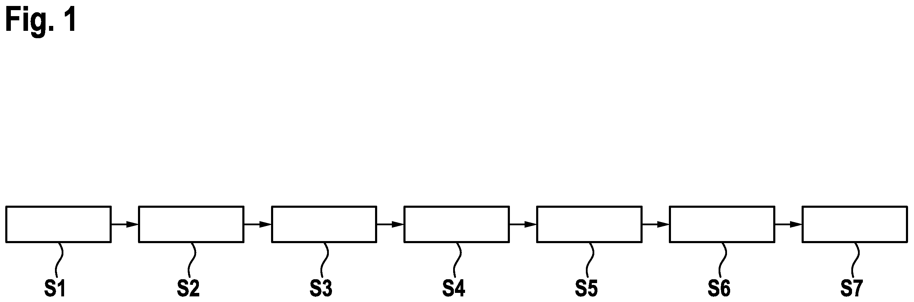

Figur 1 zeigt Schritte eines Verfahrens gemäß einer Ausführungsform der vorliegenden Erfindung.

Im Detail zeigt Figur 1 Schritte eines Verfahrens zum Überprüfen der Fahrgeschwindigkeit eines Fahrrads, insbesondere eines Pedelecs. Das Verfahren umfasst dabei die folgenden Schritte:
- Bereitstellen S1 einer Energieversorgung für einen Geschwindigkeitssignalgeber 2,
- Ermitteln S2 einer ersten Geschwindigkeit für das Fahrrad anhand eines Signals des Geschwindigkeitssignalgebers 2,
- Unterbrechen S3 der Energieversorgung für den Geschwindigkeitssignalgeber 2 für eine vorgebbare Unterbrechungszeitspanne,
- während der abgeschalteten Energieversorgung, Ermitteln S4 einer zweiten Geschwindigkeit mittels eines Geschwindigkeitssensors 3,
- Ermitteln S5 einer dritten Geschwindigkeit mittels des Geschwindigkeitssignalgebers 2,
- Ermitteln S6 eines Vergleichsergebnisses durch Vergleichen der ermittelten ersten, zweiten und dritten Geschwindigkeit, und
- Erkennen S7 eines fehlerhaften Geschwindigkeitssignalgebers 2 in Abhängigkeit des Vergleichsergebnisses.

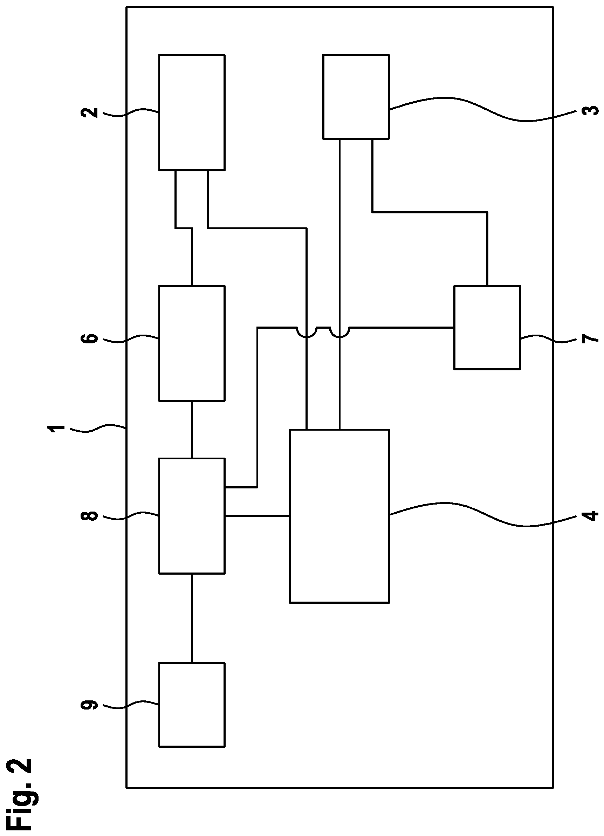

Figur 2 zeigt eine Vorrichtung gemäß einer Ausführungsform der vorliegenden Erfindung.

Im Detail zeigt Figur 2 eine Vorrichtung 1 zum Überprüfen der Fahrgeschwindigkeit eines Fahrrads, insbesondere eines Pedelecs. Die Vorrichtung 1 umfasst dabei einen Geschwindigkeitssignalgeber 2 und einen Geschwindigkeitssensor 3. Insbesondere ist der Geschwindigkeitssignalgeber 2 als Reed-Sensor ausgebildet und liefert pulsbasierte Signale, immer dann, wenn ein Felgenmagnet in einem Rad des Fahrrads den Reed-Sensor passiert.

Weiterhin ist eine Energieversorgungseinrichtung 4 angeordnet, die zur Energieversorgung mit dem Geschwindigkeitssignalgeber 2 verbunden ist. Die Energieversorgungseinrichtung 4 kann beispielsweise in Form eines Akkus oder dergleichen ausgebildet sein, zur Bereitstellung von elektrischer Energie. Die Energieversorgungseinrichtung 4 kann hierbei nicht nur den Geschwindigkeitssignalgeber 2 mit Energie versorgen, sondern ebenfalls auch weitere Komponenten am Fahrrad.

Mittels einer ersten Messeinrichtung 6, die mit dem Geschwindigkeitssignalgeber 2 verbunden ist, werden eine erste und insbesondere auch eine dritte Geschwindigkeit für das Fahrrad anhand von Messungen des Geschwindigkeitssignalgebers 2 ermittelt. Die Messungen für die erste und insbesondere dritte Geschwindigkeit erfolgen hier in zeitlichem Abstand. Mittels einer zweiten Messeinrichtung 7, die mit dem Geschwindigkeitssensor 3 verbunden ist, wird eine zweite Geschwindigkeit für das Fahrrad, beispielsweise anhand von Messungen des Geschwindigkeitssensors 3 ermittelt. Die Messung für die zweite Geschwindigkeit erfolgt hier zeitlich nach der Messung der ersten Geschwindigkeit und insbesondere vor der Messung der dritten Geschwindigkeit. Die Messeinrichtungen 6, 7 können jedoch auch in einer einzigen Messeinrichtung realisiert sein, sodass die Messeinrichtung die erste, zweite und dritte Geschwindigkeit ermittelt.

Zur Überprüfung der ordnungsgemäßen Funktion des Geschwindigkeitssignalgebers 2 ist weiter eine Überprüfungseinrichtung 8 angeordnet, die ausgebildet ist, die Energieversorgungseinrichtung 4 derart zu steuern, dass diese die Energieversorgung für den Geschwindigkeitssignalgeber 2 für eine vorgebbare Unterbrechungszeitspanne unterbricht, beispielsweise indem die elektrische Spannungsversorgung entsprechend abgeschaltet wird. Während der abgeschalteten Energieversorgung für den Geschwindigkeitssignalgeber 2 steuert die Überwachungseinrichtung 8 die zweite Messeinrichtung 7 derart, dass diese die zweite Geschwindigkeit, insbesondere mittels des Geschwindigkeitssensors 3, ermittelt. Die Überwachungseinrichtung 8 ermittelt anschließend ein Vergleichsergebnis durch Vergleichen der ermittelten ersten, zweiten und insbesondere dritten Geschwindigkeit. Anhand des Vergleichs stellt die Überwachungseinrichtung 8 dann fest, ob und gegebenenfalls in welchem Umfang ein fehlerhafter Geschwindigkeitssignalgeber 2 vorliegt. Ergeben sich beispielsweise mehrere Sprünge von zeitlich beanstandeten Messungen zwischen erster und zweiter sowie insbesondere zwischen zweiter und dritter Geschwindigkeit, wird dann festgestellt, dass der Geschwindigkeitssignalgeber 2 nicht ordnungsgemäß arbeitet. Ein entsprechendes Ergebnis kann dann einem Nutzer des Fahrrads auf einer Anzeigeeinrichtung 9 angezeigt werden.

Die Unterbrechung der Energieversorgung kann dabei zyklisch beziehungsweise regelmäßig erfolgen, beispielsweise alle 5 Minuten und/oder auch ereignisbasiert, beispielsweise wenn eine gemessene Beschleunigung über einem gewissen Grenzwert anliegt. Dies hat den Vorteil, dass der oben beschriebene Geschwindigkeitssprung besonders deutlich wird.

Darüber hinaus kann das vorliegende Überwachungsverfahren gemäß Ausführungsformen der Erfindung mit anderen Überwachungsverfahren kombiniert werden, was den Vorteil hat, eine Wahrscheinlichkeit für falsch positive Entscheidungen bezüglich eines defekten Geschwindigkeitssignalgebers zu verringern. In einer weiteren Ausführungsform kann die Energieversorgung gezielt in dem Moment unterbrochen werden, wenn ein Reed-Impuls erwartet wird, wobei der entsprechende Zeitpunkt zum Beispiel durch einen Schätzer prädiziert werden kann.

In einer weiteren Ausführungsform kann durch wiederholtes Unterbrechen der Energieversorgung und Zählen der Geschwindigkeitssprünge in einem Zeitintervall oder für eine komplette Fahrt oder für die komplette Laufzeit eines Motors, die Entscheidung, ob der Geschwindigkeitssignalgeber ordnungsgemäß arbeitet, noch robuster gemacht werden. So kann ein Festlegen, dass der Geschwindigkeitssignalgeber fehlerhaft arbeitet, erst dann erfolgen, wenn beispielsweise dreimal ein fehlerhafter Geschwindigkeitssensor basierend auf den jeweiligen Vergleichsergebnissen in einem vorgegebenen Zeitintervall erkannt wurde.

Zusammenfassend weist zumindest eine der Ausführungsformen der Erfindung zumindest einen der folgenden Vorteile auf und/oder stellt zumindest eines der folgenden Merkmale bereit:
- Einfache und äußerst zuverlässige Erkennung eines defekten Geschwindigkeitssignalgebers.
- Erhöhung der Lebensdauer von Komponenten des Fahrrads.

Obwohl die vorliegende Erfindung anhand bevorzugter Ausführungsbeispiele beschrieben wurde, ist sie nicht darauf beschränkt, sondern auf vielfältige Weise modifizierbar. Der Gegenstand der Erfindung und dessen Umfang werden durch die folgenden Ansprüche definiert.

## Patentansprüche

1. Verfahren zum Überprüfen der Fahrgeschwindigkeit eines Fahrrads, insbesondere eines Pedelecs, umfassend die Schritte,
- Bereitstellen (S1) einer Energieversorgung für einen Geschwindigkeitssignalgeber (2),
- Ermitteln (S2) einer ersten Geschwindigkeit für das Fahrrad anhand eines Signals des Geschwindigkeitssignalgebers (2),
- Unterbrechen (S3) der Energieversorgung für den Geschwindigkeitssignalgeber (2) für eine vorgebbare Unterbrechungszeitspanne,
- während der abgeschalteten Energieversorgung, Ermitteln (S4) einer zweiten Geschwindigkeit mittels eines Geschwindigkeitssensors (3),
- Ermitteln (S6) eines Vergleichsergebnisses durch Vergleichen der ermittelten ersten und zweiten Geschwindigkeit, und
- Erkennen (S7) eines fehlerhaften Geschwindigkeitssignalgebers (2) in Abhängigkeit des Vergleichsergebnisses.

2. Verfahren gemäß Anspruch 1, wobei die Energieversorgung in regelmäßigen Zeitabständen und/oder ereignisbasiert unterbrochen wird.

3. Verfahren gemäß einem der Ansprüche 1-2, wobei das Ermitteln der ersten Geschwindigkeit anhand eines Signals des Geschwindigkeitssignalgebers (2) erfolgt und wobei das Ermitteln der zweiten Geschwindigkeit anhand eines Geschwindigkeitssensors (3) erfolgt.

4. Verfahren gemäß einem der Ansprüche 1-3, wobei die Unterbrechungszeitspanne für zumindest zwei Unterbrechungen unterschiedlich festgelegt wird, insbesondere wobei bei jeder Unterbrechung der Energieversorgung eine andere Unterbrechungszeitspanne festgelegt wird, insbesondere zufällig aus einem vorgegebenen Zeitintervall ausgewählt wird.

5. Verfahren gemäß einem der Ansprüche 1-4, wobei der Geschwindigkeitssignalgeber (2) mittels eines weiteren Überprüfungsverfahrens auf ordnungsgemäße Funktion überprüft wird, wobei ein Erkennen eines fehlerhaften Geschwindigkeitssignalgebers in Abhängigkeit des Vergleichsergebnisses und einem Ergebnis des weiteren Prüfungsverfahrens erfolgt.

6. Verfahren gemäß einem der Ansprüche 1-5, wobei der Geschwindigkeitssignalgeber (2) pulsbasiert ausgebildet ist und das Unterbrechen der Energieversorgung für den Geschwindigkeitssignalgeber (2) immer dann erfolgt, wenn ein Puls des Geschwindigkeitssignalgebers (2) erwartet wird.

7. Verfahren gemäß einem der Ansprüche 1-6, wobei jeweils das Ereignis, wenn ein fehlerhafter Geschwindigkeitssignalgeber (2) erkannt wird, gezählt wird innerhalb einer vorgebbaren Zeitspanne und mit zumindest einem vorgegebenen Zähl-Schwellwert verglichen wird und wobei eine Aktion erst dann initiiert wird, wenn der vorgegebene Zähl-Schwellwert, vorzugsweise wobei der Zähl-schwellwert den Wert 3 aufweist, überschritten wird.

8. Verfahren gemäß Anspruch 7, wobei die Aktion in Form von
- einem insbesondere zeitversetzten Abschalten zumindest einer Antriebseinrichtung des Fahrrads, insbesondere des Fahrradsystems des Fahrrads, und/oder
- einer Anzeige, insbesondere einer visuellen Anzeige für einen Nutzer des Fahrrads, und/oder
- einer Benachrichtigung eines Diagnosesystems des Fahrrads, und/oder
- einem Umschalten auf ein zum Geschwindigkeitssignalgeber (2) alternatives Geschwindigkeitssignal zur Ermittlung der Geschwindigkeit des Fahrrads, insbesondere GPS,
erfolgt.

9. Verfahren gemäß einem der Ansprüche 1-8, wobei das Vergleichen der ermittelten ersten und zweiten Geschwindigkeit mittels Differenzbildung zwischen der ersten und zweiten Geschwindigkeit erfolgt und anhand der Differenzen ermittelt wird, ob ein Sprung zwischen den jeweiligen Geschwindigkeiten vorliegt.

10. Verfahren gemäß Anspruch 9, wobei ein Sprung vorliegt, wenn ein Betrag der jeweiligen Differenz größer als ein vorgebbarer Wert ist, insbesondere wobei der Wert 5 km/h beträgt, und/oder wenn eine der beiden Geschwindigkeiten 0 km/h beträgt.

11. Verfahren gemäß Anspruch 10, wobei der vorgebbare Wert in Abhängigkeit von zumindest einer der ermittelten Geschwindigkeiten festgelegt wird.

12. Verfahren gemäß einem der Ansprüche 1-11, wobei ein Ermitteln (S5) einer dritten Geschwindigkeit, insbesondere mittels des Geschwindigkeitssignalgebers, (2) erfolgt, und das Ermitteln (S6) eines Vergleichsergebnisses durch Vergleichen der ermittelten ersten, zweiten und dritten Geschwindigkeit erfolgt.

13. Vorrichtung (1) zum Überprüfen der Fahrgeschwindigkeit eines Fahrrads, insbesondere eines Pedelecs, umfassend
einen Geschwindigkeitssignalgeber (2),
einen Geschwindigkeitssensor (3),
eine Energieversorgungseinrichtung (4) zur Energieversorgung für den Geschwindigkeitssignalgeber (2),
eine Messeinrichtung (6, 7), ausgebildet zum Ermitteln einer Geschwindigkeit für das Fahrrad anhand eines Signals des Geschwindigkeitssignalgebers (2),
eine Überprüfungseinrichtung (8), die ausgebildet ist, die Energieversorgung für den Geschwindigkeitssignalgeber (2) für eine vorgebbare Unterbrechungszeitspanne zu unterbrechen, und während der abgeschalteten Energieversorgung für den Geschwindigkeitssignalgeber (2), die Messeinrichtung (6, 7) zum Ermitteln einer zweiten Geschwindigkeit mittels eines Geschwindigkeitssensors (3) zu steuern, und anschließend ein Vergleichsergebnis durch Vergleichen der ermittelten ersten und zweiten Geschwindigkeit zu ermitteln und einen fehlerhaften Geschwindigkeitssignalgeber (2) in Abhängigkeit des Vergleichsergebnisses zu erkennen.

14. Fahrrad mit einer Vorrichtung gemäß Anspruch 13.

## Claims

1. Method for checking the travel speed of a bicycle, in particular an electric bicycle, comprising the steps of
- providing (S1) a power supply for a speed signal generator (2),
- determining (S2) a first speed for the bicycle based on a signal from the speed signal generator (2),
- interrupting (S3) the power supply for the speed signal generator (2) for a predefinable interruption period,
- determining (S4) a second speed by means of a speed sensor (3) while the power supply is disconnected,
- determining (S6) a comparison result by comparing the determined first and second speeds, and
- identifying (S7) a faulty speed signal generator (2) on the basis of the comparison result.

2. Method according to Claim 1, wherein the power supply is interrupted at regular time intervals and/or in an event-based manner.

3. Method according to any of Claims 1-2, wherein the first speed is determined based on a signal from the speed signal generator (2) and wherein the second speed is determined based on a speed sensor (3).

4. Method according to any of Claims 1-3, wherein the interruption period is set differently for at least two interruptions, in particular wherein a different interruption period is set for each interruption of the power supply, in particular is selected randomly from a predefined time interval.

5. Method according to any of Claims 1-4, wherein the speed signal generator (2) is checked for proper functioning by means of an additional checking method, wherein a faulty speed signal generator is identified on the basis of the comparison result and a result of the additional checking method.

6. Method according to any of Claims 1-5, wherein the speed signal transmitter (2) is pulse-based and the power supply for the speed signal generator (2) is always interrupted when a pulse of the speed signal transmitter (2) is expected.

7. Method according to any of Claims 1-6, wherein, in each case, the event when a faulty speed signal transmitter (2) is identified is counted within a predefinable period and this is compared with at least one predefined counting threshold value, and wherein an action is only initiated if the predefined counting threshold value, preferably where the counting threshold value has the value 3, is exceeded.

8. Method according to Claim 7, wherein the action is carried out in the form of
- an, in particular time-offset, disconnection of at least one drive device of the bicycle, in particular of the bicycle system of the bicycle, and/or
- a display, in particular a visual display, for a user of the bicycle, and/or
- a notification of a diagnostic system of the bicycle, and/or
- a switchover to a speed signal that is different to that from the speed signal transmitter (2) for determining the speed of the bicycle, in particular GPS.

9. Method according to any of Claims 1-8, wherein the ascertained first and second speeds are compared by means of forming the difference between the first and second speeds, and the differences are taken as a basis for determining whether there is a jump between the respective speeds.

10. Method according to Claim 9, wherein there is a jump if a magnitude of the respective difference is greater than a predefinable value, in particular wherein the value is 5 km/h, and/or if one of the two speeds is 0 km/h.

11. Method according to Claim 10, wherein the predefinable value is set as a function of at least one of the determined speeds.

12. Method according to any of Claims 1-11, wherein a third speed is determined (S5), in particular by means of the speed signal generator (2), and a comparison result is determined (S6) by comparing the determined first, second and third speeds.

13. Device (1) for checking the travel speed of a bicycle, in particular an electric bicycle, comprising
a speed signal generator (2),
a speed sensor (3),
a power supply unit (4) for supplying power to the speed signal generator (2), a measuring unit (6, 7) designed to determine a speed for the bicycle based on a signal from the speed signal transmitter (2),
a checking unit (8) designed to interrupt the power supply for the speed signal transmitter (2) for a predefinable interruption period, and to control the measuring unit (6, 7) for determining a second speed by means of a speed sensor (3) while the power supply for the speed signal transmitter (2) is disconnected, and subsequently to determine a comparison result by comparing the determined first and second speeds and to identify a faulty speed signal transmitter (2) depending on the comparison result.

14. Bicycle having a device according to Claim 13 .

## Revendications

1. Procédé de contrôle de la vitesse de marche d'un vélo, en particulier d'un vélo électrique, comprenant les étapes suivantes
- fournir (S1) une alimentation en énergie d'un générateur de signal de vitesse (2),
- déterminer (S2) une première vitesse du vélo à partir d'un signal provenant du générateur de signal de vitesse (2),
- interrompre (S3) l'alimentation en énergie du générateur de signal de vitesse (2) pendant une durée d'interruption prédéfinissable,
- lors de la mise hors tension de l'alimentation en énergie, déterminer (S4) une deuxième vitesse au moyen d'un capteur de vitesse (3),
- déterminer (S6) un résultat de comparaison en comparant les première et deuxième vitesses déterminées, et
- détecter (S7) un générateur de signal de vitesse défectueux (2) sur la base du résultat de comparaison.

2. Procédé selon la revendication 1, dans lequel l'alimentation en énergie est interrompue à intervalles de temps réguliers et/ou sur la base d'événements.

3. Procédé selon l'une des revendications 1 et 2, dans lequel la première vitesse est déterminée à l'aide d'un signal provenant du générateur de signal de vitesse (2), et dans lequel la deuxième vitesse est déterminée à l'aide d'un capteur de vitesse (3).

4. Procédé selon l'une des revendications 1 à 3, dans lequel la durée d'interruption est réglée différemment pour au moins deux interruptions, en particulier dans lequel une durée d'interruption différente est réglée pour chaque interruption de l'alimentation en énergie, et est en particulier sélectionnée de manière aléatoire à partir d'un intervalle de temps prédéfini.

5. Procédé selon l'une des revendications 1 à 4, dans lequel le fonctionnement correct du générateur de signal de vitesse (2) est contrôlé au moyen d'un autre procédé de contrôle, dans lequel un générateur de signal de vitesse incorrect est identifié en fonction du résultat de comparaison et d'un résultat de l'autre procédé de contrôle.

6. Procédé selon l'une des revendications 1 à 5, dans lequel le générateur de signal de vitesse (2) est conçu sur la base d'impulsions et l'interruption de l'alimentation en énergie du générateur de signal de vitesse (2) a toujours lieu lorsqu'une impulsion du générateur de signal de vitesse (2) est attendue.

7. Procédé selon l'une des revendications 1 à 6, dans lequel l'événement lors duquel un générateur de signal de vitesse (2) défectueux est détecté est compté au cours d'un intervalle de temps prédéfinissable et est comparé à au moins une valeur seuil de comptage prédéfinie, et dans lequel une action n'est déclenchée que lorsque la valeur seuil de comptage prédéfinie est dépassée, la valeur seuil de comptage ayant de préférence la valeur 3.

8. Procédé selon la revendication 7, dans lequel l'action est effectuée sous la forme
- d'une mise hors tension, en particulier décalée dans le temps, d'au moins un dispositif d'entraînement du vélo, en particulier du système de bicyclette du vélo, et/ou
- d'un affichage, en particulier d'un affichage visuel destiné à un utilisateur du vélo, et/ou
- d'une notification d'un système de diagnostic du vélo, et/ou
- du passage à un signal de vitesse, autre que celui du générateur de signal de vitesse (2), destiné à déterminer la vitesse du vélo, en particulier par GPS.

9. Procédé selon l'une des revendications 1 à 8, dans lequel la comparaison des première et deuxième vitesses déterminées est effectuée au moyen d'un calcul de différence entre les première et deuxième vitesses et il est déterminé à l'aide des différences s'il se produit un saut entre les vitesses respectives.

10. Procédé selon la revendication 9, dans lequel il se produit un saut lorsqu'une valeur de la différence respective est supérieure à une valeur prédéfinissable, en particulier dans lequel la valeur est de 5 km/h, et/ou lorsque l'une des deux vitesses est de 0 km/h.

11. Procédé selon la revendication 10, dans lequel la valeur prédéfinissable est fixée en fonction d'au moins l'une des vitesses déterminées.

12. Procédé selon l'une des revendications 1 à 11, dans lequel une troisième vitesse est déterminée (S5), en particulier au moyen du générateur de signal de vitesse (2), et un résultat de comparaison est déterminé (S6) par comparaison des première, deuxième et troisième vitesses déterminées.

13. Dispositif (1) de contrôle de la vitesse de marche d'un vélo, en particulier d'un vélo électrique, comprenant
un générateur de signal de vitesse (2),
un capteur de vitesse (3),
un dispositif d'alimentation en énergie (4) destiné à alimenter en énergie le générateur de signal de vitesse (2),
un dispositif de mesure (6, 7) conçu pour déterminer une vitesse du vélo à l'aide d'un signal provenant du générateur de signal de vitesse (2),
un dispositif de contrôle (8) qui est conçu pour interrompre l'alimentation en énergie du générateur de signal de vitesse (2) pendant une durée d'interruption prédéfinissable et pour commander le dispositif de mesure (6, 7) afin de déterminer une deuxième vitesse au moyen d'un capteur de vitesse (3) pendant la mise hors tension de l'alimentation en énergie du générateur de signal de vitesse (2), puis pour déterminer un résultat de comparaison en comparant les première et deuxième vitesses déterminées et détecter un générateur de signal de vitesse (2) défectueux en fonction du résultat de comparaison.

14. Vélo comportant un dispositif selon la revendication 13.
